(19) Europäisches Patentamt
European Patent Office
Office européen des brevets

(11) Publication number: **0 302 318 B1**

(12) **EUROPEAN PATENT SPECIFICATION**

(45) Date of publication of patent specification: **11.12.91**

(51) Int. Cl.5: **C10M 111/04**, C09K 3/30, //(C10M111/04,107:38,107:38), C10N50:04

(21) Application number: **88111793.1**

(22) Date of filing: **21.07.88**

(54) **Use of a lubricating aerosol composition.**

(30) Priority: **24.07.87 JP 186021/87**

(43) Date of publication of application:
**08.02.89 Bulletin 89/06**

(45) Publication of the grant of the patent:
**11.12.91 Bulletin 91/50**

(84) Designated Contracting States:
**DE FR GB**

(56) References cited:
**EP-A- 0 180 996**
**NL-A- 6 801 885**
**US-A- 3 592 790**

(73) Proprietor: **DAIKIN INDUSTRIES, LIMITED**
**Umeda Center Building, 4-12, Nakazaki-nishi 2-chome, Kita-ku**
**Osaka-shi, Osaka-fu(JP)**

(72) Inventor: **Tohzuku, Takashi**
**1-5-9-401, Wakayamadai Shimamoto-cho**
**Mishima-gun Osaka-fu(JP)**
Inventor: **Kataoka, Yoshiaki**
**3-8-21-507, Furuichi Jot-ku**
**Osaka-shi Osaka-fu(JP)**
Inventor: **Ishikawa, Sueyoshi**
**1015, Habu-cho**
**Kishiwada-shi Osaka-fu(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to an aerosol composition. More particularly, it relates to an aerosol composition comprising a fluorine-containing compound.

### Description of the Related Art

A lubricant comprising, as a base oil, a fluorine-containing compound such as perfluoropolyether is commercially available in the form of a grease. Therefore, it is difficult to apply such lubricant in a minute space.

NL-A-6801885 describes an aerosol composition for use as a hairspray which includes a fluorinated aerosol propellant such as dichlorodifluoromethane, a perfluoropolyether comprising repeating units of $-(CF(CF_3)CF_2O)-$, and a solvent such as dichlorotetrafluoroethane or trichlorotrifluoroethane.

US-A-3592780 discloses an aerosol spray composition which is suitable for domestic application to form non-stick coatings which includes finely divided granular polytetrafluoroethylene.

### SUMMARY OF THE INVENTION

An object of the present invention is the use of a lubricant composition comprising a fluorine-containing compound which has good penetrating property and durability and can be easily applied to a minute space.

According to the present invention, there is provided the use of an aerosol composition as a non-cosmetic lubricant comprising (A) a perfluoropolyether, (B) a propellant gas and optionally (C) a polymer comprising tetrafluoroethylene and/or (D) a fluorine-containing diluent.

### DETAILED DESCRIPTION OF THE INVENTION

As the perfluoropolyether (A), exemplified is a compound comprising repeating units of the formula:

$-(CF_2CF_2CF_2O)_j-$,
$-(CFXCF_2O)_k-$or
$-(CFXCF_2O)_l-(CF_2O)_m-$

wherein in X is a fluorine atom or a trifluoromethyl group, and j and k are each a number of 2 to 200, and the sum of l and m is not smaller than 2 and not larger than 200.

Specific examples of the perfluoropolyether (A) are:

$$CF_3CF_2CF_2-O-(CF_2CF_2CF_2O)_{20}-CF_2CF_3$$

$$F-(\overset{\displaystyle CF_3}{\overset{|}{C}}FCF_2O)_k-CF_2CF_3$$

and

$$CF_3O-(\overset{\displaystyle CF_3}{\overset{|}{C}}FCF_2O)_l-(CF_2O)_m-CF_3$$

wherein k, l and m are the same as defined above.

When the perfluoropolyether (A) comprises the repeating units of the formula: $-(CFXCF_2O)_l-(CF_2O)_m-$, the sequence of the repeating units of $-(CFXCF_2O)-$ and $-(CF_2O)-$is not limited to said formula and these repeating units may be randomly sequenced.

Preferred examples of the propellant gas (B) are flon gas propellants such as dichlorodifluoromethane, tetrafluoromethane, chlorodifluoromethane and the like, although compressed air, compressed inert gas

(e.g. nitrogen) and the like may be used as the propellant gas (B).

The optionally used polymer (C) comprising tetrafluoroethylene can be a homopolymer of tetrafluoroethylene or a copolymer of tetafluoroethylene with at least one other copolymerizable monomer such as perfluorovinyl ether, hexafluoropropylene and chlorotrifluoroethylene in which a content of tetrafluoroethylene is not less than 50 % by mole. The copolymer (C) may be in the form of powder or a dispersion in a dispersant such as the fluorine-containing diluent (D).

Examples of the optionally used fluorine-containing diluent (D) are trichlorotrifluoroethane, tetrachlorodifluoroethane and dichlorodifluoroethane. The diluent may contain other diluent containing no fluorine such as ethanol or isopropanol. The diluent (D) is useful for adjusting the pressure of the aerosol composition and the optimum concentrations of the perfluoropolyether (A) and the the polymer (C).

When the aerosol composition essentially consists of the perfluoropolyether (A) and the flon propellant gas (B), the content of the perfluoropolyether (A) is from 0.07 to 90 % by weight, preferably from 2 to 50 % by weight based on the whole weight of the composition.

When the aerosol composition essentially consists of the perfluoropolyether (A), the flon propellant gas (B) and the polymer (C), the content of the perfluoropolyether (A) is from 0.07 to 89.97 % by weight, preferably from 2 to 50 % by weight based on the whole weight of the composition, and the content of the polymer (C) is from 0.03 to 25 % by weight, preferably from 1 to 15 % by weight based on the whole weight of the composition.

When the aerosol composition essentially consists of the perfluoropolyether (A), the flon propellant gas (B) and the diluent (D), the content of the perfluoropolyether (A) is from 0.07 to 89.07 % by weight, preferably from 2 to 50 % by weight based on the whole weight of the composition, and the content of the diluent (D) is from 0.93 to 89.93 % by weight, preferably from 5 to 83 % by weight based on the whole weight of the composition.

When the aerosol composition essentially consists of the perfluoropolyether (A), the flon propellant gas (B), the polymer (C) and the diluent (D), the content of the perfluoropolyether (A) is from 0.07 to 89.04 % by weight, preferably from 2 to 50 % by weight based on the whole weight of the composition, the content of the polymer (C) is from 0.03 to 25 % by weight, preferably from 1 to 15 % by weight based on the whole weight of the composition, and the content of the diluent (D) is from 0.93 to 89.9 % by weight, preferable from 5 to 82 % by weight based on the whole weight of the composition.

The aerosol composition used in the present invention may further contain other components such as a surfactant for increasing the penetration property, a rust preventive for increasing corrosion resistance, a high pressure additive for improving lubricity.

The aerosol composition used in the present invention may be prepared by a per se conventional method for the preparation of a similar aerosol composition.

For example, the aerosol composition essentially consisting of the perfluoropolyether (A) and the propellant (B) may be prepared by adding the propellant (B) to the perfluoropolyether (A). The aerosol composition essentially consisting of the perfluoropolyether (A), the propellant (B) and the polymer (C) or the diluent (D) may be prepared by adding the propellant (B) to a mixture of the perfluoropolyether (A) and the polymer (C) or the diluent (D). The aerosol composition essentially consisting of the perfluoropolyether (A), the propellant (B), the polymer (C) and the diluent (D) may be prepared by adding the diluent (D) to a grease consisting of the perfluoropolyether (A) and the polymer (C) to produce a solution or a mixture and then adding the propellant (B) to the solution or the mixture to obtain the aerosol composition, or by adding the propellant (B) to a mixture of the perfluoropolyether (A), the polymer (C) in the form of powder or the dispersion and the diluent (D) to obtain the aerosol composition.

The aerosol composition used in the present invention is non-combustible and has good penetrability due to its low surface tension and excellent lubricity and durability.

Therefore, the aerosol composition used in the present invention can be used as a heat resistant lubricant for lubricating a minute sliding part which is exposed to high temperature such as in an electric heater or a heater. The aerosol composition used in the present invention can be used as a rust proof lubricant and sprayed onto a part which is exposed to severe environmental conditions such as screws of a chemical plant, or an external sliding part which often contacts rain or water. In addition, the aerosol composition used in the present invention can be used as a mold-releasing agent by applying it on a cavity surface of a mold for molding a rubber or a resin, particularly the rubber which requires high temperature for molding.

Further, the aerosol composition used in the present invention can be applied to a position which is required to have good durability but on which the conventional lubricant is difficult to apply.

## PREFERRED EMBODIMENTS OF THE INVENTION

The present invention will be illustrated by following Examples.

Example 1

To a mixture of a perfluoropolyether oil of the formula: $F-(CF_2CF_2CF_2O)_n-CF_2CF_3$ (n is 27 on the average) (Demnam S-65 manufactured by Daikin Industries Ltd.) (20 g) and low molecular weight polytetrafluoroethylene (Lublon L5 manufactured by Daikin Industries Ltd.) (10 g), trichlorotrifluoroethane (Daiflon S3 manufactured by Daikin Industries, Ltd.) (120 g) was added and well mixed by a high speed mixer. Then, the mixture was filled in a spraying can. To the can, dichlorodifluoromethane (Diflon 12 manufactured by Daikin Industries Ltd.) (50 g) was injected followed by sealing of the can to obtain an aerosol composition in the can.

The composition was sprayed on a glass plate from a distance of 15 cm to form a uniform grease film on the glass plate.

Example 2

To a mixture of the same perfluoropolyether oil as used in Example 1 (10 g) and a dispersion of polytetrafluoroethylene in trichlorotrifluoroethane (Lublon LD-1 manufactured by Daikin Industries Ltd.) (50 g), trichlorotrifluoroethane (100 g) was added and well mixed. Thereto, dichlorodifluoromethane (40 g) was added and filled in a spraying can to obtain an aerosol composition in the can.

The composition was sprayed on a glass plate form a distance of 15 cm to form a good grease film on the glass plate.

Example 3

To a perfluorogrease consisting of 65 % by weight of perfluoropolyether (Demnam S-65) and 35 % by weight of low molecular weight polytetrafluoroethylene (Demnam-grease L-65) (30 g), trichlorotrifluoroethane (120 g) was added and well mixed. Thereto, dichlorodifluoromethane (40 g) was added and filled in a spraying can to obtain an aerosol composition in the can.

The composition was sprayed on a glass plate form a distance of 15 cm to form a good grease film on the glass plate.

Example 4

To a mixture of the same perfluoropolyether oil as used in Example 1 (30 g) and trichlorotrifluoroethane (130 g), dichlorodifluoromethane (40 g) was added and filled in a spraying can to obtain an aerosol composition in the can.

The obtained aerosol composition had good spray-ability. When it was sprayed on a steel plate form a distance of 20 cm to form a good oily film on the steel plate.

Example 5

To a mixture of a perfluoropolyether oil of the formula: $F-(CF_2CF_2CF_2O)_n-CF_2CF_3$ (n is 16 on the average) (Demnam S-20, manufactured by Daikin Industries Ltd.) (90 g), low molecular weight tetrafluoroethylene (Lublon L5) (20 g) was added and well mixed. Thereto, dichlorodifluoromethane (90 g) was added and filled in a spraying can to obtain an aerosol composition in the can.

The obtained aerosol composition had good spray-ability. When it was sprayed on a glass plate form a distance of 20 cm to form a good oily film on the glass plate.

Example 6

To a mixture of the same perfluoropolyether oil as used in Example 1 (100 g), dichlorodifluoromethane (100 g) was added and filled in a spraying can to obtain an aerosol composition in the can.

The obtained aerosol composition had good spray-ability. When it was sprayed on a glass plate form a distance of 15 cm to form a good grease film on the glass plate.

**Claims**

1. Use of an aerosol composition as a non-cosmetic lubricant comprising (A) a perfluoropolyether, (B) a propellant gas and optionally (C) a polymer comprising tetrafluoroethylene and/or (D) a fluorine-containing diluent.

2. The use according to claim 1, wherein the perfluoropolyether (A) is a compound comprising repeating units of the formula:

$-(CF_2CF_2CF_2O)_j-$,
$-(CFXCF_2O)_k-$or
$-(CFXCF_2O)_l-(CF_2O)_m-$

wherein in x is a fluorine atom or a trifluoromethyl group, and j and k are each a number of 2 to 200, and the sum of l and m is not smaller than 2 and not larger than 200.

3. The use according to claim 2, wherein the perfluoropolyether (A) is a polyether comprising the repeating units of the formula: $-(CF_2CF_2CF_2O)_j-$ wherein j is the same as defined above.

4. The use according to claim 1, wherein the propellant gas is at least one selected from the group consisting of dichlorodifluoromethane, tetrafluoromethane and chlorodifluoromethane.

5. The use according to claim 1, wherein the polymer (C) is a homopolymer of tetrafluoroethylene.

6. The use according to claim 1, wherein the diluent (D) is at least one selected from the group consisting of trichlorotrifluoroethane, tetrachlorodifluoroethane and dichlorodifluoroethane.

## Revendications

1. Utilisation d'une composition d'aérosol comme lubrifiant non cosmétique comprenant (A) un perfluoropolyéther, (B) un gaz propulseur et éventuellement (C) un polymère comprenant le tétrafluoroéthylène et/ou (D) un diluant contenant du fluor.

2. Utilisation selon la revendication 1, selon laquelle le perfluoropolyéther (A) est un composé comprenant des unités de récurrence de formule :

$-(CF_2CF_2CF_2O)_j-$,
$-(CFXCF_2O)_k-$ou
$-(CFXCF_2O)_l-(CF_2O)_m-$

formule dans laquelle X et un atome de fluor ou un groupe trifluorométhyle, et j et k désignent chacun un nombre de 2 à 200, et la somme de l et de m n'est pas inférieure à 2 et n'est pas supérieure à 200.

3. Utilisation selon la revendication 2, selon laquelle le perfluoropolyéther (A) est un polyéther comprenant des unités de récurrence de formule $-(CF_2CF_2CF_2O)_j-$ dans laquelle j est comme défini ci-dessus.

4. Utilisation selon la revendication 1, selon laquelle le gaz propulseur est au moins un élément choisi dans le groupe comprenant le dichlorodifluorométhane, le tétrafluorométhane et le chlorodifluorométhane.

5. Utilisation selon la revendication 1, selon laquelle le polymère (C) est un homopolymère du tétrafluoroéthylène.

6. Utilisation selon la revendication 1, selon laquelle le diluant (D) est au moins un élément choisi dans le groupe comprenant le trichlorotrifluoroéthane, le tétrachlorodifluoroéthane et le dichlorodifluoroéthane.

## Patentansprüche

1. Verwendung einer Aerosolzusammensetzung als nicht-kosmetisches Schmiermittel, das (A) einen Perfluoropolyether, (B) ein Treibgas und gegebenenfalls (C) ein Tetrafluoroethylen umfassendes Polymer und/oder (D) ein fluorhaltiges Streckmittel umfasst.

2. Verwendung nach Anspruch 1, wobei der Perfluoropolyether (A) eine Verbindung ist, die die wiederkehrenden Einheiten der Formeln

$-(CF_2CF_2CF_2O)_j-$,
$-(CFXCF_2O)_k-$oder
$-(CFXCF_2O)_l-(CF_2O)_m-$

umfasst, wobei X ein Fluoratom oder eine Trifluoromethylgruppe darstellt, und j und k jeweils eine Zahl von 2 bis 200 sind, und die Summe von 1 und m nicht kleiner als 2 und nicht grösser als 200 ist.

3. Verwendung nach Anspruch 2, wobei der Perfluoropolyether (A) ein Polyether ist, der die wiederkehrenden Einheiten der Formel $-(CF_2CF_2CF_2O)_j-$ umfasst, wobei j wie oben definiert ist.

4. Verwendung nach Anspruch 1, wobei das Treibgas mindestens eine Verbindung, ausgewählt aus der Reihe Dichlorodifluoromethan, Tetrafluoromethan und Chlorodifluoromethan, ist.

5. Verwendung nach Anspruch 1, wobei das Polymer (C) ein Homopolymer von Tetrafluoroethylen ist.

6. Verwendung nach Anspruch 1, wobei das Streckmittel (D) mindestens eine Verbindung, ausgewählt aus der Reihe Trichlorotrifluoroethan, Tetrachlorodifluoroethan und Dichlorodifluoroethan, ist.